(19) Europäisches Patentamt
European Patent Office
Office européen des brevets

(11) Veröffentlichungsnummer: **0 265 383**
**A2**

# (12) EUROPÄISCHE PATENTANMELDUNG

(21) Anmeldenummer: **87810589.9**

(22) Anmeldetag: **14.10.87**

(51) Int. Cl.[4]: **C 09 B 57/00**
C 07 D 471/04, C 08 K 5/34
//C09B48/00,C09D7/00,
C07D471:00,C07D221:00,
C07D221:00

(30) Priorität: **20.10.86 US 920624**

(43) Veröffentlichungstag der Anmeldung:
**27.04.88 Patentblatt 88/17**

(84) Benannte Vertragsstaaten:
**BE CH DE ES FR GB IT LI NL**

(71) Anmelder: **CIBA-GEIGY AG**
**Klybeckstrasse 141**
**CH-4002 Basel (CH)**

(72) Erfinder: **Rochat, Alain Claude, Dr.**
**Route de Schiffenen 38**
**CH-1700 Fribourg (CH)**

**Iqbal, Abul, Dr.**
**La Dey 202**
**CH-1711 Arconciel (CH)**

**Jaffe, Edward Ephraim, Dr.**
**3 Crenshaw Drive**
**Wilmington Delaware 19810 (US)**

## (54) Verwendung von Pyridochinolon-Derivaten als Pigmente.

(57) Verfahren zum Färben von hochmolekularem organischem Material in der Masse, gekennzeichnet durch die Verwendung einer Verbindung der Formel I

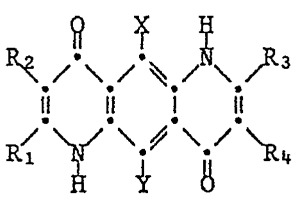

(I),

worin eines von $R_1$ und $R_2$ und eines von $R_3$ und $R_4$ unabhängig voneinander Wasserstoff, $C_1$-$C_{12}$-Alkyl oder Benzyl sind und die anderen beiden Reste unabhängig voneinander unsubstituiertes oder durch Halogen, Trifluormethyl, Cyano, $C_1$-$C_{12}$-Alkyl oder durch die Gruppen $-OR_5$, $-SR_5$, $-COR_6$ oder $-SO_2R_6$ substituiertes Phenyl, Biphenyl oder Naphthyl sind oder eine 5- oder 6-gliedrigen aromatischen heterocyclischen Ring enthaltend ein oder mehrere gleiche oder verschiedene Heteroatome ausgewählt aus der Gruppe bestehend aus Stickstoff, Sauerstoff und Schwefel ohne oder mit einem oder zwei ankondensierten Benzolringen bedeuten, $R_5$ Wasserstoff oder $C_1$-$C_{12}$-Alkyl, $R_6$ $C_1$-$C_{12}$-Alkyl und X und Y unabhängig voneinander Wasserstoff, Halogen oder Cyano bedeuten.

Die Erfindung betrifft auch neue Pyridochinolone der Formel I.

Die mit (I) erhaltenen Färbungen zeichnen sich durch einen gelben Farbton, eine sehr hohe Farbstärke, die sich auch bei längeren Verarbeitungs-und Verweilzeiten nicht wesentlich verändert, hohe Sättigung, gute Dispergierbarkeit, gute Ueberlackier-, Migrations-, Nass-, Reib-, Licht- und Wetterbeständigkeit und insbesondere durch eine ausgezeichnete Hitzebeständigkeit aus.

EP 0 265 383 A2

## Beschreibung

Verwendung von Pyridochinolon-Derivaten als Pigmente

Die vorliegende Erfindung betrifft das Färben von hochmolekularem organischem Material mit Diaryl- oder Dihetaryl-pyrido-[2,3-g]-chinolin-4,9-dionen sowie neue Diaryl- oder Dihetaryl-pyrido-[2,3-g]-chinolin-4,9-dione.

Ein Verfahren zur Herstellung des Pyridochinolons der Formel

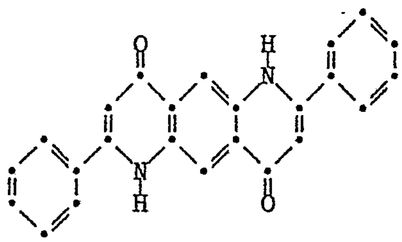

wurde bereits 1969 durch B. Sillion und G. De Gaudemaris in J. Polymer Science (C) 16, 4653-4667 beschrieben. Erst jetzt wurde erkannt, dass Pyridochinolone dieser Art sich überraschenderweise sehr gut zum Färben von hochmolekularem organischem Material eignen.

Gegenstand der vorliegenden Erfindung ist demnach ein Verfahren zum Färben von hochmolekularem organischem Material in der Masse, gekennzeichnet durch die Verwendung einer Verbindung der Formel I

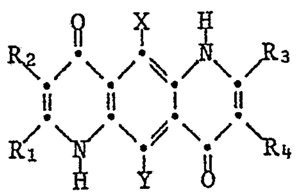

(I),

worin eines von $R_1$ und $R_2$ und eines von $R_3$ und $R_4$ unabhängig voneinander Wasserstoff, $C_1$-$C_{12}$-Alkyl oder Benzyl sind und die anderen beiden Reste unabhängig voneinander unsubstituiertes oder durch Halogen, Trifluormethyl, Cyano, $C_1$-$C_{12}$-Alkyl oder durch die Gruppen $-OR_5$, $-SR_5$, $-COR_6$ oder $-SO_2R_6$ substituiertes Phenyl, Biphenyl oder Naphthyl sind oder einen 5- oder 6-gliedrigen aromatischen heterocyclischen Ring enthaltend ein oder mehrere gleiche oder verschiedene Heteroatome ausgewählt aus der Gruppe bestehend aus Stickstoff, Sauerstoff und Schwefel ohne oder mit einem oder zwei ankondensierten Benzolringen bedeuten, $R_5$ Wasserstoff oder $C_1$-$C_{12}$-Alkyl, $R_6$ $C_1$-$C_{12}$-Alkyl und X und Y unabhängig voneinander Wasserstoff, Halogen oder Cyano bedeuten.

Bedeuten etwaige Substituenten $C_1$-$C_{12}$-Alkyl, so handelt es sich z.B. um Methyl, Ethyl, n-Propyl, Isopropyl, n-Butyl, sec-Butyl oder tert.-Butyl, n-Pentyl, tert.-Pentyl, Neopentyl, Hexyl Heptyl, Octyl, Nonyl, Decyl, Dodecyl.

Halogen bedeutet z.B. Brom, Fluor oder bevorzugt Chlor.

$R_1$ bis $R_4$ bedeuten als aromatische heterocyclische Ringe z.B Pyridyl, Pyrimidyl, Pyrazinyl, Triazinyl, Furyl, Pyrrolyl, Thienyl, Chinolyl, Cumarinyl, Benzfuranyl, Benzimidazolyl, Benzoxazolyl, Dibenzfuranyl, Benzothienyl, Dibenzothienyl, Indolyl, Carbazolyl, Pyrazolyl, Imidazolyl, Oxazolyl, Isoxazolyl, Thiazolyl, Indazolyl, Benzthiazolyl, Pyridazinyl, Cinnolinyl, Chinazolinyl, Chinoxalinyl, Phthalazinyl, Phthalazindionyl, Phthalimidyl, Chromonyl, Naphtholacetamyl, Chinolonyl, Maleinimidyl, Naphthyridinyl, Benzimidazolonyl, Benzoxazolonyl, Benzthiazolonyl, Benzthiazothionyl, Chinazolonyl, Chinoxalonyl, Phthalazonyl, Dioxopyrimidinyl, Pyridonyl, Isochinolonyl, Isochinolinyl, Isothiazolyl, Benzisoxazolyl, Benzisothiazolyl, Indazolonyl, Acridinyl, Acridonyl, Chinazolindionyl, Chinoxalindionyl, Benzoxazindionyl, Benzoxazinonyl und Naphthalimidyl.

Von besonderem Interesse ist die Verwendung von Verbindungen der Formel I, worin eines von $R_1$ und $R_2$ und eines von $R_3$ und $R_4$ Wasserstoff sind un die anderen beiden Reste unabhängig voneinander unsubstituiertes oder durch $C_1$-$C_{12}$-Alkyl oder $C_1$-$C_{12}$-Alkoxy substituiertes Phenyl, Biphenyl oder Naphthyl sind oder einen heterocyclischen Rest ausgewählt aus der Gruppe bestehend aus Pyridyl, Pyrazinyl, Triazinyl, Furyl, Pyrrolyl, Thienyl, Chinolyl, Cumarinyl, Indolyl, Benzfuranyl, Benzimidazolyl und Benzoxazolyl bedeuten.

Von ganz besonderem Interesse ist die Verwendung von Verbindungen der Formel I, worin eines von $R_1$ und $R_2$ und eines von $R_3$ und $R_4$ Wasserstoff sind und die anderen beiden Reste unabhängig voneinander p-Biphenyl, β-Naphthyl, unsubstituiertes oder durch $C_1$-$C_4$-Alkyl substituiertes Phenyl bedeuten und X und Y Wasserstoff sind.

Bevorzugt wird die Verwendung von Verbindungen der Formel I, worin $R_2$ und $R_4$ Wasserstoff sind.

Besonders bevorzugt wird die Verwendung von Verbindungen der Formel I, worin $R_2$ und $R_4$ Wasserstoff sind, $R_1$ und $R_3$ gleich sind und p-Biphenyl, β-Naphthyl, unsubstituiertes oder durch $C_1$-$C_4$-Alkyl, substituiertes Phenyl bedeuten und X and Y Wasserstoff sind.

Die Pyridochinolone der Formel I können durch Umsetzung einer 2,5-Diamino-terephthalsäure oder deren Ester der Formel II

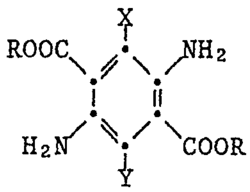 (II),

worin R Wasserstoff, oder $C_1$-$C_{12}$-Alkyl (z.B. Methyl oder Ethyl) bedeutet und X und Y die oben angegebene Bedeutung haben, mit je einem Keton der Formeln III und IV

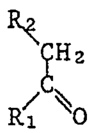 (III), 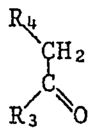 (IV)

oder je einem Ketal der Formeln V und VI

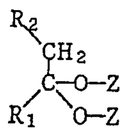 (V) 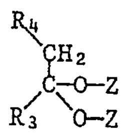 (VI)

oder mit einem Gemisch aus einem Keton der Formel III und einem Ketal der Formel VI worin $R_1$, $R_2$, $R_3$ und $R_4$ die oben angegebene Bedeutung haben und Z $C_1$-$C_4$-alkyl ist oder beide Z zusammen $C_1$-$C_4$-Alkylen, wie z.B. Ethylen, Propylen oder Butylen, bilden, im Molverhältnis 1:1:1, nach an sich bekannten Methoden hergestellt werden.

Die Verbindungen der Formeln II bis VI sind bekannte Verbindungen. Sollten einzelne davon noch neu sein, so können sie in Analogie zu bekannten Methoden hergestellt werden.

Wird anstelle des Ketals (normalerweise ein Dioxolan-Derivat) das entsprechende freie aromatische Keton mit dem Diamin (II) umgesetzt, so wird die Kondensation zweckmässig in Gegenwart eines sauren Katalysators durchgeführt (z.B. Schwefelsäure, Toluol-4-sulfonsäure, Benzoesäure, 2-Ethyl-capronsäure, usw. oder auch Lewis-Säuren, wie z.B. $AlCl_3$, $ZnCl_2$, $CaCl_2$ usw.).

Wie eingangs bereits erwähnt, ist das Pyridochinolon der Formel I, worin $R_1$ und $R_3$ Phenyl sind und $R_2$, $R_4$, X und Y Wasserstoff bedeuten, bekannt. die übrigen Pyridochinolone der Formel I sind neu.

Einen weiteren Erfindungsgegenstand bilden die Verbindungen der Formel VII

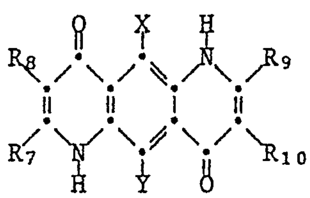 (VII),

worin eines von $R_7$ und $R_8$ und eines von $R_9$ und $R_{10}$ unabhängig voneinander Wasserstoff, $C_1$-$C_{12}$-Alkyl oder Benzyl sind und die anderen beiden Reste unabhängig voneinander unsubstituiertes Biphenyl oder Naphthyl oder durch Halogen, Trifluormethyl, Cyano, $C_1$ $C_{12}$-Alkyl oder durch die Gruppen -$OR_5$, -$SR_5$, -$COR_6$ oder -$SO_2R_6$ substituiertes Phenyl, Biphenyl oder Naphthyl sind oder einen 5-oder 6-gliedrigen aromatischen heterocyclischen Ring enthaltend ein oder mehrere gleioche oder verschiedene Heteroatome ausgewählt aus der Gruppe bestehend aus Stickstoff, Sauerstoff und Schwefel ohne oder mit einem oder zwei ankondensierten Benzolringen bedeuten und $R_5$, $R_6$, X und Y die oben angegebene Bedeutung haben.

Halogen bedeutet z.B. Brom, Fluor und insbesondere Chlor.

$R_7$ bis $R_{10}$ als aromatische heterocyclischer Ringe haben die gleiche Bedeutung wie oben für $R_1$ bis $R_4$ angegeben.

Von besonderem Interesse sind Verbindungen der Formel VII, worin eines von $R_7$ und $R_8$ und eines von $R_9$ und $R_{10}$ Wasserstoff sind und die anderen beiden Reste unabhängig voneinander unsubstituiertes Biphenyl oder Naphthyl oder durch $C_1$-$C_{12}$-Alkyl oder $C_1$-$C_{12}$-Alkoxy substituiertes Phenyl, Biphenyl oder Naphthyl sind oder einen heterocyclischen Rest ausgewählt aus der Gruppe bestehend aus Pyridyl, Pyrazinyl, Triazinyl, Furyl, Pyrrolyl, Thienyl, Chinolyl, Cumarinyl, Indolyl, Benzfuranyl, Benzimidazolyl und Benzoxazolyl bedeuten.

Bevorzugt sind Verbindungen der Formel VII, worin eines von $R_7$ und $R_8$ und eines von $R_9$ und $R_{10}$ Wasserstoff sind und die anderen beiden Reste unabhängig voneinander p-Biphenyl, β-Naphthyl oder durch $C_1$-$C_4$-Alkyl substituiertes Phenyl bedeuten und X und Y Wasserstoff sind.

Besonders bevorzugt sind Verbindungen der Formel VII, worin $R_8$ und $R_{10}$ Wasserstoff bedeuten.

Ganz besonders bevorzugt sind Verbindungen der Formel VII, worin $R_8$ und $R_{10}$ Wasserstoff sind, $R_7$ und $R_9$ gleich sind und p-Biphenyl, β-Naphthyl und durch $C_1$-$C_4$-Alkyl substituiertes Phenyl bedeuten und X und Y Wasserstoff sind.

Dank ihrer ausserordentlich geringen Löslichkeit und ihrer äusserst hohen Hitzebeständigkeit eignen sich die Verbindungen der Formel I ausgezeichnet als Pigmente. Dabei ist es vorteilhaft, die bei der Synthese anfallenden Rohprodukte in eine optimale Pigmentform überzuführen, z.B. durch Umfällung und Rekristallisation oder durch Lösungsmittel-Konditionierung oder durch Mahlung und anschliessende Konditionierung. Dies kann beispielsweise auf folgende Weise geschehen:

a) durch Mahlen oder Kneten, zweckmässig in Gegenwart von Mahlhilfsmitteln, wie anorganischen oder organischen Salzen mit oder ohne Zusatz organischer Lösungsmittel. Nach dem Mahlen werden die Hilfsmittel wie üblich entfernt, lösliche anorganische Salze z.B. mit Wasser und wasserunlösliche organische Lösungsmittel beispielsweise durch Wasserdampfdestillation,

b) durch Umfällen aus konzentrierten Säuren, wie z.B. Schwefelsäure, Methansulfonsäure, Toluolsulfonsäure, Trichloressigsäure oder Polyphosphorsäure oder Gemischen davon,

c) Ueberführen des Rohpigmentes in ein Alkali- oder Aminsalz und Hydrolyse des letzteren. Dies geschieht beispielsweise durch Anrühren des Rohpigmentes mit einer Base, beispielsweise mit einem Alkalihydroxid oder -alkoholat, Ammoniak oder einem Amin in einem polaren organischen Lösungsmittel, wie Dimethylformamid, wobei das Pigment ganz oder teilweise in Lösung geht. Durch Hydrolyse, vorzugsweise durch Ansäuern der gegebenenfalls filtrierten Lösung, wird das Pigment ausgefällt.

In jedem Fall ist eine Rekristallisation zweckmässig, vorzugsweise durch Nachbehandlung der aus der Synthese anfallenden Rohpigmente mit organischen Lösungsmitteln, insbesondere mit solchen, die über 100°C sieden.

Als Lösungsmittel eignen sich z.B. durch Halogenatome, Alkyl- oder Nitrogruppen substituierte Benzole, wie Xylole, Chlorbenzol, o-Dichlorbenzol oder Nitrobenzol sowie Pyridinbasen, wie Pyridin, Picolin oder Chinolin, ferner Ketone, wie Cyclohexanon, Ether wie Ethylenglykolmonomethyl- oder -monoethylether, Amide, wie Dimethylformamide oder N-Methyl-pyrrolidon, sowie Dimethylsulfoxid und Sulfolan. Man kann die Nachbehandlung auch in Wasser allein oder in einer wässrigen Säure, wie z.B. Salzsäure, Schwefelsäure oder Phosphorsäure, durchführen, gegebenenfalls in Gegenwart von organischen Lösungsmitteln und/oder mit Zusatz von oberflächenaktiven Substanzen. Diese Prozesse können auch unter Druck ablaufen.

Besonders geeignet ist die Umfällung mit konzentrierter Säure, wie z.B. Schwefelsäure, mit anschliessender Konditionierung des mit Wasser gefällten Pigments durch Erwärmen bei hohen Temperaturen (100 - 200°C), gegebenenfalls unter Druck.

Je nach Verwendungszweck erweist es sich als vorteilhaft, die Pigmente als Toner oder in Form von Präparaten zu verwenden.

Das mit den Pyridochinolonen der Formel I zu färbende hochmolekulare organische Material kann natürlicher oder künstlicher Herkunft sein. Es kann sich z.B. um Naturharze oder trocknende Oele, Kautschuk oder Casein oder um abgewandelte Naturstoffe, wie Chlorkautschuk, ölmodifizierte Alkydharze, Viscose, um Celluloseether oder -ester, wie Celluloseacetat, Cellulosepropionat, Celluloseacetobutyrat oder Nitrocellulose, handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt: Polyolefine, wie Polyethylen, Polypropylen oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Kopolymerisate der erwähnten Monomeren, insbesondere ABS oder EVA.

Aus der Reihe der Polyadditions- und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z.B. Alkydharze, als auch ungesättigte, wie beispielsweise Maleinatharze, ferner die linearen Polyester und Polyamide oder Silikone genannt.

Die erwähnten hochmolekularen Verbindungen können einzeln oder in Gemischen als plastische Massen oder Schmelzen, die gegebenenfalls zu Fasern versponnen werden können, vorliegen.

Sie können auch in Form ihrer Monomeren oder im polymerisierten Zustand in gelöster oder suspendierter Form als Filmbildner oder Bindemittel für Lacke, Anstrichstoffe oder Druckfarben vorliegen, wie z.B. Leinölfirnis, Nitrocellulose, Alkydharze, Melaminharze und Harnstoff-Formaldehydharze oder Acrylharze.

Die Pyridochinolone der Formel I eignen sich ganz besonders für die Pigmentierung von thermoplastischen Kunststoffen, wie z.B. Polystyrol, ABS, Kautschuk, Polyamide, Polycarbonate, lineare Polyester und insbesondere Polyolefine, bevorzugt Polyethylen und insbesondere Polypropylen. Von grossem Interesse ist auch die Pigmentierung von "Engineering Plastics".

Die Pigmentierung der hochmolekularen organischen Substanzen mit den Pyridochinolonen der Formel I erfolgt beispielsweise derart, dass man ein solches Pigment als Toner oder bevorzugt in Form von Präparaten oder Masterbatches, diesen Substraten unter Verwendung von Walzwerken, Misch- oder Mahlapparaten

zumischt. Das pigmentierte Material wird hierauf nach an sich bekannten Verfahren, wie Kalandrieren, Pressen, Strangpressen, Streichen, Giessen, Spritzgiessen oder Verspinne in die gewünschte endgültige Form gebracht. Oft ist es erwünscht, zur Herstellung von nicht starren Formlingen oder zur Verringerung ihrer Sprödigkeit den hochmolekulalren Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes oder im Gemisch mit letzterem in die Polymeren eingearbeitet werden. Es ist ferner möglich, zwecks Erzielung verschiedener Farbtöne den hochmolekularen, organischen Stoffen neben den Pyridochinolonen der Formel I noch Füllstoffe bzw. andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die Pyridochinolonen der Formel I gegebenenfalls zusammen mit Zusatzstoffen, wie Füllmitteln, anderen Pigmenten, Siccativen oder Weichmachern, in einem organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Gegebenenfalls kann man die Pyridochinolonen der Formel I wie bereits erwähnt vorgängig einem Mahl- und Mischprozess und anschliessender Rekristallisation unterwerfen.

Bezogen auf das zu pigmentierende hochmolekulare organische Material setzt man die Pyridochinolone der Formel I in einer Menge von beispielsweise 0,01 bis 30 Gew.%, vorzugsweise 0,1 bis 10 Gew.% ein.

In Färbungen, beispielsweise in Kunststoffen, Fasern, Lacken oder Drucken, zeichnen sich die Pyridochinolone der Formel I durch einen gelben Farbton, eine hohe Farbstärke, die sich auch bei längeren Verarbeitungs- und Verweilzeiten nicht wesentlich verändert, hohe Sättigung, gute Dispergierbarkeit, gute Ueberlackier-, Migrations-, Nass-, Reib-, Licht-, Wetterbeständigkeit und insbesondere durch eine ausgezeichnete Hitzebeständigkeit aus. Ausserdem verleihen sie den daraus hergestellten Ausfärbungen einen guten Glanz und beeinträchtigen die mechanischen Festigkeiten der gefärbten Substrate nicht oder nur geringfügig.

Von besonderem Interesse ist das Färben von thermoplastischen Kunststoffen in der Masse.

In den nachfolgenden Beispielen bedeuten die Teile, sofern nichts anderes angegeben wird, Gewichtsteile und die Prozente Gewichtsprozente.

Beispiel 1:

In einem 500 ml Sulfierkolben mit Propellerrührer, Thermometer und absteigendem Kühler für die Destillation der flüchtigen Reaktionspartner werden unter Stickstoffspülung 25,74 g 2,5-Diamino-terephthalsäurediethylester, 57,95 g 2-Methyl-2-phenyl-1,3-dioxolan und 350 ml Diphenylether vorgelegt. Die erhaltene Suspension wird in ein vorgeheiztes Metallbad (Woods-metal) eingetaucht und es wird stufenweise bis auf 246°C geheizt, wobei etwa 15 ml einer gelblichen Flüssigkeit abdestilliert werden. Nach $1^1/_2$ bis 2 Stunden wird die gewünschte Reaktionstemperatur von mindestens 240°C erreicht und man kann die Destillation unterbrechen und auf Rückfluss umstellen. Eine kurze Zeit darauf beginnt das sich bildende Produkt auszukristallisieren. Man lässt das Gemisch ca. 20 Stunden bei 246°C am Rückfluss kochen, dann kühlt man es auf ca. 90°C ab und filtriert schliesslich durch eine Nutsche. Das leuchtende Produkt wird nacheinander mit ca. 500 ml heissem o-Dichlorbenzol, 500 ml Ethanol und 1 l heissem Wasser, jeweils bis das Filtrat farblos abläuft, gewaschen. Das Wasserfeuchte Produkt wird im Vakuumtrockenschrank bei ca 100°C getrocknet. Man erhält 27,9 g der Verbindung der Formel

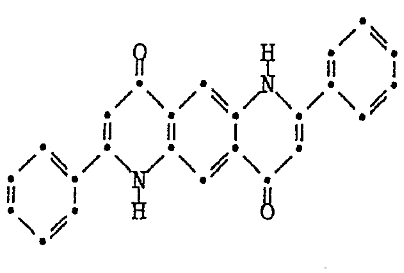

als braungelbes sandiges Pulver (76,6 % d.Th.).

Beispiele 2 - 10:

Man verfährt wie in Beispiel 1 unter Verwendung äquivalenter Mengen der entsprechenden Dioxolane abstelle von 2-Methyl-2-phenyl-1,3-dioxolan und erhält die in nachstehender Tabelle aufgeführten Produkte der Formel

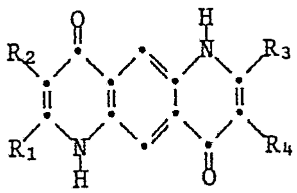

| Beispiel Nr. | $R_1 = R_3$ | $R_2 = R_4$ | Ausbeute % d.Th. | Farbton in PVC (0,2 Gew.% Pigment) |
|---|---|---|---|---|
| 2 | 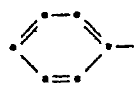 | $CH_3$- | 64,2 | Hellgelb |
| 3 | 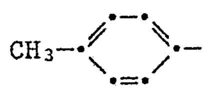 | H | 70,1 | kräftiges leuchtendes Gelb |
| 4 | 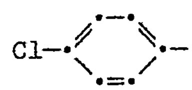 | H | 70,1 | grünstichiges Gelb |
| 5 | 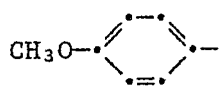 | H | 74,0 | grünstichiges Gelb |
| 6 | 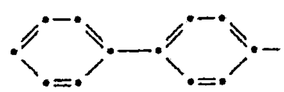 | H | 55,4 | Gelborange |
| 7 | 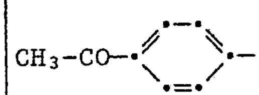 | H | 83,9 | Gelborange |
| 8 | 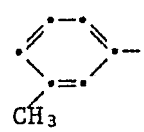 | H | 57,2 | grünstichiges Gelb |
| 9 | 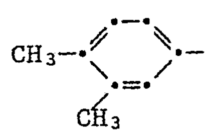 | H | 82,3 | grünstichiges Gelb |
| 10 | 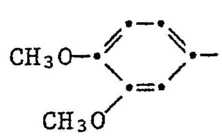 | H | 80,3 | schwach grünstichiges Gelb |

Beispiel 11:

13,2 g des Pigmentes aus Beispiel 3 werden in 264 ml 96%iger Schwefelsäure bei Raumtemperatur gelöst. Die erhaltene Lösung wird dann in einen Tropftrichter umgefüllt und auf 2300 ml Eiswasser zudosiert; die Innentemperatur steigt dabei von 2° auf 26° C. Der Tropftrichter wird mit wenig Wasser gespült, dann wird die Pigment-Suspension auf 95° C (Rückfluss) erwärmt und während 18,5 Stunden bei dieser Temperatur gehalten. Nach dem Abkühlen auf ca. 70° C wird die Suspension filtriert und mit heissem Wasser bis neutral gewaschen. Die Trocknung im Vakuumofen bei ca. 80° C ergibt 12,93 g rekristallisiertes Pigment. Dieses

Produkt (12,5 g) wird anschliessend in N-Methylpyrrolidon (190 ml) suspendiert und das Gemisch wird auf 180°C geheizt. Nach 17-stündigem Halten bei dieser Temperatur wird das Pigment bei 80°C filtriert und nacheinander mit Dimethylformamid, Methanol und Wasser gründlich gewaschen. Nach der Trocknung bei 120°C im Vakuum werden 12,2 g einer deckenden Pigment-Qualität erhalten.

Beispiel 12:

3,09g 2,5-Diaminoterephthalsäure-diethylester, 4,87 g 3-Acetyl-indol und 4,41 g 2-Ethyl-capronsäure werden zusammen mit 30 ml Diphenylether in einem Sulfierkolben vorgelegt. Das Gemisch wird dann auf ca. 160°C erwärmt und ca. 3 Stunden bei dieser Temperatur gehalten; dann wird auf 202°C weitergeheizt, wobei die flüchtigen Reaktionskomponenten abdestilliert werden, bei 202°C während 22 Stunden ausgerührt und auf ca. 100°C abgekühlt. Das erhaltene Produkt wird abfiltriert und nacheinander mit warmem o-Dichlorbenzol, mit Dimethylformamid, Methanol und schliesslich mit heissem Wasser gewaschen. Die Trocknung im Vakuumofen bei ca. 80°C liefert 4,35 g der Verbindung der Formel

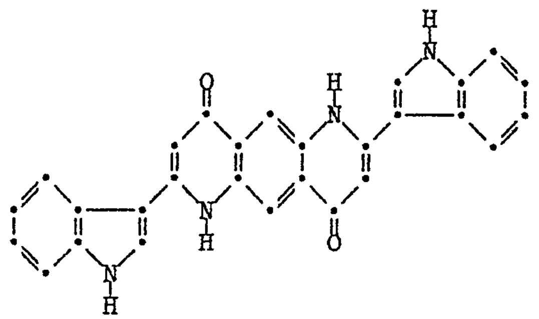

als gelbes Pulver entsprechend einer Ausbeute von 82 % der Theorie.

Beispiel 13:

Dieselbe Kondensationsreaktion wie im Beispiel 12 wird mit 3-Acetylpyridin anstelle von 3-Acetyl-indol durchgeführt; man erhält das Produkt der Formel

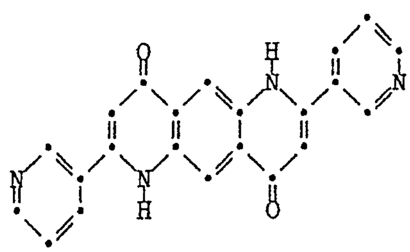

als gelbes Pulver mit einer Ausbeute von 84,4 % der Theorie.

Beispiel 14::

Dieselbe Kondensationsreaktion wie im Beispiel 12 mit 4-Hydroxy-acetophenon anstelle von 3-Acetyl-indol ergibt das Produkt der Formel

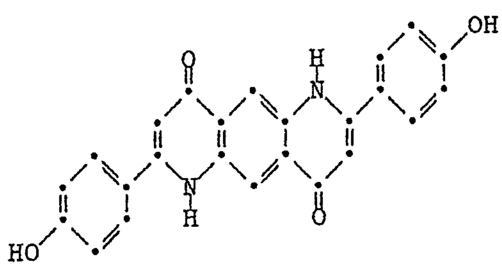

als gelbes Pulver mit einer Ausbeute von 89,7 % der Theorie.

Beispiel 15:

Dieselbe Kondensationsreaktion wie in Beispiel 12 mit 4-Cyanacetophenon anstelle von 3-Acetyl-indol ergibt das Produkt der Formel

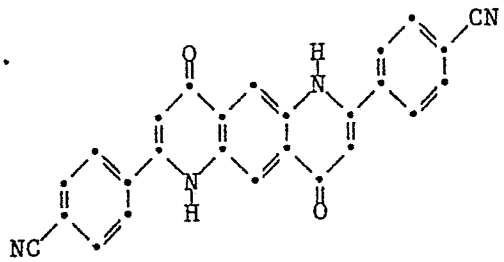

Beispiel 16:

Dieselbe Kondensationsreaktion wie in Beispiel 12 mit 3-Trifluormethylacetophenon anstelle von 3-Acetyl-indol ergibt das Produkt der Formel

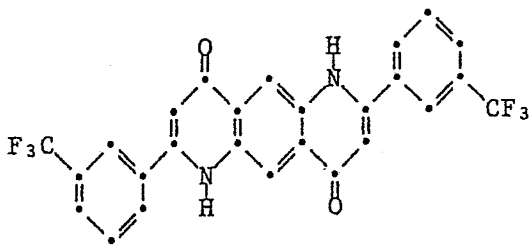

als gelbes Pulver mit einer Ausbeute von 28,4 % der Theorie.

Beispiel 17:

Die Verbindung von Beispiel 1 kann auch nach folgender Methode erhalten werden: Ein Gemisch bestehend aus 2,57 g 2,5-Diaminoterephthalsäure-diethylester, 15 ml Acetophenon und 0,28 g wasserfreiem Zinkchlorid wird unter Stickstoff auf 170° C erhitzt und 3 Stunden bei dieser Temperatur gehalten. Danach erhöht man die Temperatur auf 180-185° C und lässt 13 Stunden bei dieser Temperatur reagieren, wobei die flüchtigen Anteile laufend abdestilliert werden. Abschliessend wird auf 80° C abgekühlt und filtriert. Der Rückstand wird nacheinander mit Dimethylformamid und Methanol gründlich gewaschen und bei 80° C im Vakuumtrockenschrank getrocknet. Man erhält 3,29 g des braungelben Produktes (90,4 % der Theorie).

Beispiel 18:

2,57 g 2,5-Diaminoterephthalsäurediethylester, 5,21 g Methyl-2-naphthylketon und 0,28 g wasserfreies Zinkchlorid werden zusammen mit 15 ml N-Methylpyrrolidon unter Stickstoff vorgelegt. Das Gemisch wird zuerst auf 170° C erhitzt und die erhaltene Lösung während 3 Stunden bei dieser Temperatur gehalten, wobei das Gelbpigment auszufallen beginnt. Dann wird die Temperatur auf 180-185° C erhöht und bis zur Beendigung der Reaktion konstant gehalten (maximum 24 Stunden), wobei die flüchtigen Anteile laufend abdestilliert werden. Die Pigmentsuspension wird anschliessend auf 110° C abgekühlt, mit 15 ml Dimethylformamid verdünnt, filtriert, nacheinander mit genügenden Mengen Dimethylformamid, Methanol und heissem Wasser gewaschen und bei 80° C im Vakuumtrockenschrank getrocknet. Man erhält 3,48 g eines leuchtenden Gelbpigments der Formel

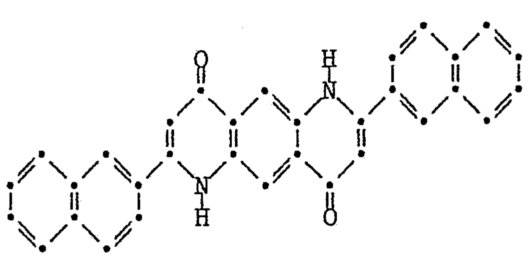

mit hervorragenden Hitzeechtheiten.

Beispiel 19:

Ein Gemisch bestehend aus 2,55 g 2,5-Diaminoterephthalsäure-diethylester, 1,75 g 4-Chloracetophenon, 3,28 g 2-Methyl-2-phenyl-1,3-dioxolan (100%ig), 0,24 g Benzoesäure und 50 ml Diphenylether wird in einem

kleinen Sulfierkolben (100 ml) unter Stickstoff vorgelegt und möglichst regelmässig innert 6 Stunden auf 200°C erhitzt. Bei dieser Temperatur beginnt das Pigment auszufallen. Dann wird die Temperatur auf 240-245°C erhöht und bis zur Beendigung der Reaktion (ca. 21 Stunden) konstant gehalten, wobie die flüchtigen Anteile laufend abdestilliert werden. Danach wird auf 110°C abgekühlt und filtriert. Der Rückstand wird gründlich nacheinander mit Dimethylformamid und Methanol gewaschen und bei 80°C im Vakuumtrokkenschrank getrocknet. Man erhält 2,91 g eines gelben Produktes, entsprechend einer Ausbeute von 73 % der Theorie (bezogen auf das Molekulargewicht der unsymmetrischen Verbindung). Es handelt sich um ein Gemisch aus den drei Verbindungen der Formeln

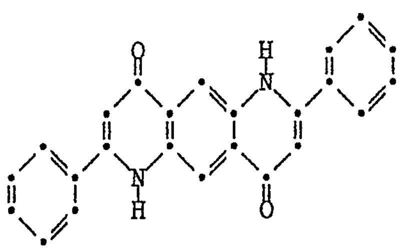

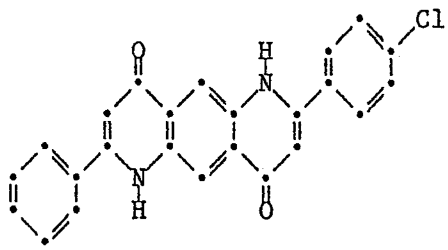

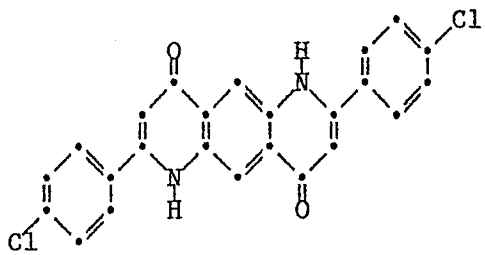

Beispiels 20:
0,6 g des Produktes gemäss Beispiel 1 in Form eines 50%igen Polyester-Präparates werden mit 67 g Polyvinylchlorid, 33g Dioctylphthalat, 2 g Dibutylzinndilaurat und 2 g Titandioxid zusammengemischt und auf dem Walzenstuhl während 15 Minuten bei 160°C zu einer dünnen Folie verarbeitet. Die so erzeugte gelbe Färbung ist farbstark, migrations- und lichtecht.

Beispiel 21:
0,2 g des Produkts gemäss Beispiel 1 welches zuvor in konz. Schwefelsäure gelöst und mit Wasser umgefällt und anschliessend in der gleichen Lösung am Rückfluss rekristallisiert wurde, 1 g Titandioxid (Rutil) und 100 g LD-Polyäthylengranulat werden in einer Trommel gemischt und das Gemisch anschliessend auf dem Mischwalzwerk bei 130° verarbeitet. Die Masse wird heiss zu Platten verpresst oder in der Strangpresse verformt. Die Platten zeigen eine schöne gelbe Färbung von guter Lichtechtheit.

Beispiel 22: +
60 Teile einer 60%igen Lösung eines nicht-trocknenden Alkydharzes in Xylol (Handelsname Beckosol 27-320 der Firma Reichhold-Albert-Chemie), 36 Teile einer 50%igen Lösung eines Melamin-Formaldehyd-Harzes in einem Butanol-Xylol-Gemisch (Handelsname Super-Beckamin 13-501 der Firma Reichhold-Albert-Chemie), 2 Teile Xylol und 2 Teile Methylcellosolve werden vermischt und 100 Teile dieses Gemisches werden mit Hilfe eines Rührers zu einer homogenen Lacklösung verrührt.

95 Teile des so erhaltenen Klarlackes und 5 Teile des Produktes gemäss Beispiel 11 werden in einer Kugelmühle während 72 Stunden gemahlen. Der eingefärbte Lack wird dann nach üblicher Spritzmethode auf Blech appliziert und 30 Minuten bei 120°C eingebrannt. Man erhält eine gelbe Lackierung von guter Lichtechtheit.

**Patentansprüche**

1. Verfahren zum Färben von hochmolekularem organischem Material in der Masse, gekennzeichnet durch die Verwendung einer Verbindung der Formel I

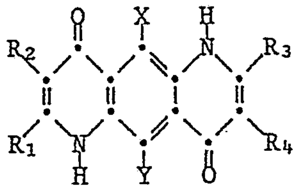

(I),

worin eines von $R_1$ und $R_2$ und eines von $R_3$ und $R_4$ unabhängig voneinander Wasserstoff, $C_1$-$C_{12}$-Alkyl oder Benzyl sind und die anderen beiden Reste unabhängig voneinander unsubstituiertes oder durch Halogen, Trifluormethyl, Cyano, $C_1$-$C_{12}$-Alkyl oder durch die Gruppen $-OR_5$, $SR_5$, $-COR_6$ oder $-SO_2R_6$ substituiertes Phenyl, Biphenyl oder Naphthyl sind oder einen 5- oder 6-gliedrigen aromatischen heterocyclischen Ring enthaltend ein oder mehrere gleiche oder verschiedene Heteroatome ausgewählt aus der Gruppe bestehend aus Stickstoff, Sauerstoff und Schwefel ohne mit einem oder zwei ankondensierten Benzolringen bedeuten, $R_5$ Wasserstoff oder $C_1$-$C_{12}$-Alkyl, $R_6$ $C_1$-$C_{12}$-Alkyl und X und Y unabhängig voneinander Wasserstoff, Halogen oder Cyano bedeuten.

2. Verfahren gemäss Anspruch 1, gekennzeichnet durch die Verwendung von Verbindungen der Formel I, worin eines von $R_1$ und $R_2$ und eines von $R_3$ und $R_4$ Wasserstoff sind und die anderen beiden Reste unabhängig voneinander unsubstituiertes oder durch $C_1$-$C_{12}$-Alkyl oder $C_1$-$C_{12}$-Alkoxy substituiertes Phenyl, Biphenyl oder Naphthyl sind oder einen heterocyclischen Rest ausgewählt aus der Gruppe bestehend aus Pyridyl, Pyrazinyl, Triazinyl, Furyl, Pyrrolyl, Thienyl, Chinolyl, Cumarinyl, Indolyl, Benzfuranyl, Benzimidazolyl und Benzoxazolyl bedeuten.

3. Verfahren gemäss Anspruch 1, gekennzeichnet durch die Verwendung von Verbindungen der Formel I, worin eines von $R_1$ und $R_2$ und eines von $R_3$ und $R_4$ Wasserstoff ist und die anderen beiden Reste unabhängig voneinander p-Biphenyl, β-Naphthyl, unsubstituiertes oder durch $C_1$-$C_4$-Alkyl substituiertes Phenyl bedeuten und X und Y Wasserstoff sind.

4. Verfahren gemäss Anspruch 1, gekennzeichnet durch die Verwendung von Verbindungen der Formel I, worin $R_2$ und $R_4$ Wasserstoff sind.

5. Verfahren gemäss Anspruch 1, gekennzeichnet durch die Verwendung von Verbindungen der Formel I, worin $R_2$ und $R_4$ Wasserstoff sind, $R_1$ und $R_3$ gleich sind und p-Biphenyl, β-Naphthyl, unsubstituiertes oder durch $C_1$-$C_4$-Alkyl substituiertes Phenyl bedeuten und X und Y Wasserstoff sind.

6. Verbindungen der Formel VII

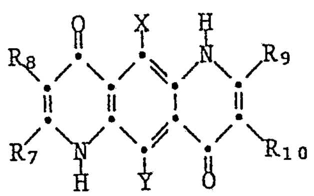

(VII),

worin eines von $R_7$ und $R_8$ und eines von $R_9$ und $R_{10}$ unabhängig voneinander Wasserstoff, $C_1$-$C_{12}$-Alkyl oder Benzyl sind und die anderen beiden Reste unabhängig voneinander unsubstituiertes Biphenyl oder Naphthyl oder durch Halogen, Trifluormethyl, Cyano, $C_1$-$C_{12}$-Alkyl oder durch die Gruppen $-OR_5$, $-SR_5$, $-COR_6$ oder $-SO_2R_6$ substituiertes Phenyl, Biphenyl oder Naphthyl sind oder einen 5-oder 6-gliedrigen aromatischen heterocylischen Ring enthaltend ein oder mehrere gleiche oder verschiedene Heteroatome ausgewählt aus der Gruppe bestehend aus Stickstoff, Sauerstoff und Schwefel ohne oder mit einem oder zwei ankondensierten Benzolringen bedeuten, $R_5$ Wasserstoff oder $C_1$-$C_{12}$-Alkyl, $R_6$ $C_1$-$C_{12}$-Alkyl und X und Y unabhängig voneinander Wasserstoff, Halogen oder Cyano bedeuten.

7. Verbindungen gemäss Anspruch 6, der Formel VII, worin eines von $R_7$ und $R_8$ und eines von $R_9$ und $R_{10}$ Wasserstoff sind und die anderen beiden Reste unabhängig voneinander unsubstituiertes Biphenyl oder naphthyl sind oder durch $C_1$-$C_{12}$-Alkyl oder $C_1$-$C_{12}$-Alkoxy substituiertes Phenyl, Biphenyl oder Naphthyl sind oder einen heterocyclischen Rest ausgewählt aus der Gruppe bestehend aus Pyridyl, Pyrazinyl, Triazinyl, Furyl, Pyrrolyl, Thienyl, Chinolyl, Cumarinyl, Indolyl, Benzfuranyl, Benzimidazolyl und Benzoxazolyl bedeuten.

8. Verbindungen gemäss Anspruch 6, der Formel VII, worin eines von $R_7$ und $R_8$ und eines von $R_9$ und $R_{10}$ Wasserstoff sind und die anderen beiden Reste unabhängig voneinander p-Biphenyl, β-Naphthyl oder durch $C_1$-$C_4$-Alkyl substituiertes Phenyl bedeuten und X und Y Wasserstoff sind.

9. Verbindungen gemäss Anspruch 6 der Formel VII, worin $R_8$ und $R_{10}$ Wasserstoff bedeuten.

10. Verbindungen gemäss Anspruch 6 der Formel VII, worin $R_8$ und $R_{10}$ Wasserstoff sind, $R_7$ und $R_9$ gleich sind und p-Biphenyl, β-Naphthyl und durch $C_1$-$C_4$-Alkyl substituiertes Phenyl bedeuten und X und Y Wasserstoff sind.

11. In der Masse gefärbtes hochmolekulares Material enthaltend ein Pyridochinolon der Formel I gemäss Anspruch 1.

Patentansprüche für den folgenden Vertragsstaat: ES

1. Verfahren zum Färben von hochmolekularem organischem material in der Masse, gekennzeichnet durch die Verwendung einer Verbindung der Formel I

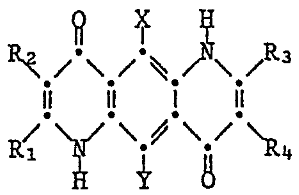

(I),

worin eines von $R_1$ und $R_2$ und eines von $R_3$ und $R_4$ unabhängig voneinander Wasserstoff, $C_1$-$C_{12}$-Alkyl oder Benzyl sind und die anderen beiden Reste unabhängig voneinander unsubstituiertes oder durch halogen, Trifluormethyl, Cyano, $C_1$-$C_{12}$-Alkyl oder durch die Gruppen $-OR_5$, $SR_5$, $-COR_6$ oder $-SO_2R_6$ substituiertes Phenyl, Biphenyl oder Naphthyl sind oder einen 5- oder 6-gliedrigen aromatischen heterocyclischen Ring enthaltend ein oder mehrere gleiche oder verschiedene Heteroatome ausgewählt aus der Gruppe bestehend aus Stickstoff, Sauerstoff und Schwefel ohne oder mit einem oder zwei ankondensierten Benzolringen bedeuten, $R_5$ Wasserstoff oder $C_1$-$C_{12}$-Alkyl, $R_6$ $C_1$-$C_{12}$-Alkyl und X und Y unabhängig voneinander Wasserstoff, Halogen oder Cyano bedeuten.

2. Verfahren gemäss Anspruch 1, gekennzeichnet durch die Verwendung von Verbindungen der Formel I, worin eines von $R_1$ und $R_2$ und eines von $R_3$ und $R_4$ Wasserstoff sind und die anderen beiden Reste unabhängig voneinander unsubstituiertes oder durch $C_1$-$C_{12}$ Alkyl oder $C_1$-$C_{12}$-Alkoxy substituiertes Phenyl, Biphenyl oder Naphthyl sind oder einen heterocyclischen Rest ausgewählt aus der Gruppe bestehend aus Pyridyl, Pyrazinyl, Triazinyl, Furyl, Pyrrolyl, Thienyl, Chinolyl, Cumarinyl, Indolyl, Benzfuranyl, Benzimidazolyl und Benzoxazolyl bedeuten.

3. Verfahren gemäss Anspruch 1, gekennzeichnet durch die Verwendung von Verbindungen der Formel I, worin eines von $R_1$ und $R_2$ und eines von $R_3$ und $R_4$ Wasserstoff ist und die anderen beiden Reste unabhängig voneinander p-Biphenyl, β-Naphthyl, unsubstituiertes oder durch $C_1$-$C_4$-Alkyl substituiertes Phenyl bedeuten und X und Y Wasserstoff sind.

4. Verfahren gemäss Anspruch 1, gekennzeichnet durch die Verwendung von Verbindungen der Formel I, worin $R_2$ und $R_4$ Wasserstoff sind.

5. Verfahren gemäss Anspruch 1, gekennzeichnet durch die Verwendung von Verbindungen der Formel I, worin $R_2$ und $R_4$ Wasserstoff sind, $R_1$ und $R_3$ gleich sind und p-Biphenyl, β-Naphthyl, unsubstituiertes oder durch $C_1$-$C_4$-Alkyl substituiertes Phenyl bedeuten und X und Y Wasserstoff sind.